# EUROPÄISCHE PATENTSCHRIFT

(11) **EP 1 631 441 B1**
(45) Veröffentlichungstag und Bekanntmachung des Hinweises auf die Patenterteilung: **12.09.2007**
(21) Anmeldenummer: 04725326.5
(22) Anmeldetag: 02.04.2004
(51) Int. Cl.: B29C 70/12, B29C 70/30

(54) **VERFAHREN UND VORRICHTUNG ZUR HERSTELLUNG VON DREIDIMENSIONAL AUSGEPRÄGTEN FORMTEILEN SOWIE FORMTEIL**
METHOD AND DEVICE FOR PRODUCING THREE-DIMENSIONAL MOLDED PARTS AND CORRESPONDING MOLDED PART
PROCEDE ET DISPOSITIF POUR PRODUIRE DES PIECES MOULEES TRIDIMENSIONNELLES, AINSI QUE PIECE MOULEE CORRESPONDANTE

(30) Priorität: 30.05.2003 DE 10324735
(43) Veröffentlichungstag der Anmeldung: 08.03.2006
(73) Patentinhaber: Fiber Engineering GmbH, 76185 Karlsruhe (DE)
(72) Erfinder: FÖRSTER, Egon, 76744 Wörth am Rhein (DE)
(74) Vertreter: Petirsch, Markus
(86) Internationale Anmeldenummer: PCT/EP2004/003505
(87) Internationale Veröffentlichungsnummer: WO 2004/106042

(56) Entgegenhaltungen:
- US-A- 5 942 175

## Beschreibung

Die vorliegende Erfindung betrifft ein Verfahren und eine Vorrichtung zur Herstellung von dreidimensional ausgeprägten Formteilen aus Fasermaterial unter Verwendung einer Form, umfassend eine Unterform, deren Innenseite die Kontur der Unterseite des Formteils bestimmt, und wenigstens eine Oberform, deren Innenseite die Kontur der Oberseite des Formteils bestimmt, wobei die Unterform und bzw. oder die Oberform Löcher zum Durchströmen von Luft aufweisen. Die Erfindung bezieht sich auch auf das Formteil selbst.

Dreidimensional ausgeprägte Formteile aus Fasermaterial werden insbesondere in der Automobilindustrie eingesetzt. Diese Formteile dienen zur Schalldämmung. Sie finden beispielsweise Verwendung als Türverkleidungen, Hutablagen und als Fahrzeughimmel. Ebenso werden der Boden und die Verbindungswände vom Fahrgastraum zu Kofferraum wie auch vom Fahrgastraum zum Motorraum mit schalldämmenden Formteilen ausgekleidet. Dabei sollen möglichst großflächige einstückige Teile eingesetzt werden. Die Karosseriebleche im Fahrzeug sind unter Steifigkeitsgesichtspunkten und unter dem Gesichtspunkt der Materialeinsparung stark und unregelmäßig verformt. Sie weisen Aufnahmen für zusätzliche Komponenten des Fahrzeugs und Durchführungen auf, zum Beispiel für Kabelkanäle und Lenksäule. Die verwendeten Formteile zur Schalldämmung müssen sich an diese stark dreidimensional ausgeformten Karosserieteile anpassen.

Dreidimensional ausgeprägte Formteile zur Schalldämmung, so genannte Akustikteile, mit ungleicher Dicke können zur Zeit aus PU-Schaum gefertigt werden. Dieser ist jedoch relativ teuer, da er auf Rohölbasis hergestellt wird. Zudem ist der PU-Schaum auch schwer recycelbar. Beim Brand emittiert er giftige Dämpfe.

Formteile aus herkömmlichen Fasermatten, die durch Walzen von Fasermaterialien produziert werden, sind nur sehr bedingt geeignet. Fasermatten können nämlich nur für schwach verformte Teile verwendet werden. Bei stärkerer Verformung reißen die Matten. Auch weisen sie aufgrund des Walzverfahrens keine gleichmäßige Dichteverteilung auf. Dadurch entsprechen sie häufig nicht den geometrischen und akustischen Anforderungen, die an solche speziellen Formteile gestellt werden.

Im Stand der Technik sind ferner dreidimensional geformte Vliesteile bekannt, die aus einem Fasergemisch oder aus Fasern und einem zugesetzten Bindemittel bestehen. Diese Vliesteile werden mittels Hot-Moulding-Prozess hergestellt: Ein Fasergemisch rieselt von oben in eine Unterform, so dass die Fasern in der Unterform angehäuft werden. Dieses Beflocken der Unterform geschieht über einen beweglichen Schwenkkanal, der über der Unterform bewegt werden kann. Nach Befüllung der Unterform wird eine Oberform auf die Unterform aufgesetzt, so dass die locker aufgeschichteten Fasern verpresst werden. Anschließend wird die aus Unterform und Oberform bestehende Form mit heißer Luft durchströmt, so dass die Fasern miteinander verschmelzen und ein Formteil entsteht. Nachteilig an diesem Verfahren ist, dass eine partielle Beflockung nicht exakt erfolgen kann und somit insbesondere eine lokale Erhöhung der Dichte nicht möglich ist. Da die Dichte des endgültigen Formteils nur durch die angehäuften Fasern in einem lokalen Bereich bestimmt wird, kann nur im Rahmen der durch die Schwerkraft möglichen Anhäufung die Dichte im Formteil variiert werden. Ebenso ist es nur schwer möglich, das Gewicht des gesamten Formteils dadurch zu reduzieren, dass bestimmte, akustisch unkritische Bereiche eine geringere Dichte aufweisen. Die Reduzierung des Gesamtgewichts ist aber im Fahrzeugbau von großer Wichtigkeit. Da die Beflockung der Unterform einzig nach den Gesetzen der Gravitation erfolgt, indem nämlich die Fasern einfach in die Form eingestreut werden, ergibt sich eine hohe Zykluszeit für die Herstellung eines solchen Formteils. Aufgrund der teuren Maschinennutzungszeiten sind die Kosten des Formteils deshalb ziemlich hoch.

Die Offenlegungsschrift DE 23 18 501.5 offenbart eine Vorrichtung zur Herstellung von Faservorformlingen. Zerhäckselte Fasern werden gegen die innere Oberfläche einer horizontal rotierenden siebartigen Form aufgebracht. Die Zuführung geschieht über eine Röhre, die horizontal beweglich ist. Die in der Form angelagerten Fasern werden durch ein äußeres Vakuum, das die äußere Oberfläche der Form umgibt, gegen die Form gepresst. Anschließend werden die Fasern mit einem Kunstharz-Bindemittelspray überzogen, das bei Wärme aushärtet. Die mit Fasern gefüllte Form kann mit Heißluft durchzogen werden, so dass der Formling gehärtet wird.

Die DE 35 41 073 A1 beschreibt ein Verfahren und eine Vorrichtung zur Herstellung eines Ausgangsmaterials zur Formung eines faserverstärkten Teils. Rohfasern, die mit Harzen getränkt sind, werden in Segmente vorgegebener Länge zerschnitten und in einem Behälter gesammelt. Der Behälter ist beweglich, so dass Fasern entsprechend dem herzustellenden Formteil angelagert werden. Dieses Verfahren weist jedoch die oben beschriebenen Nachteile auf.

Die EP 1 250 991 A1 offenbart ein Herstellungssystem zur automatischen Herstellung von Vorformen. Das System umfasst zwei Zellen mit je einem Formteil, einem Gebläse für beide Zellen und einer automatischen Zuführeinheit, um Endlosfasern den Formen zuzuführen. Die Zuführeinheit weist mehrere Hülsen auf, um die Reibung zu reduzieren und die Führung der Fasern zu verbessern.

Die US 5 942 175 A offenbart gemäß dem Oberbegriff des Anspruchs 1 ein Verfahren und eine Vorrichtung gemäß dem Oberbegriff des Anspruchs 5 zum Formpressen von losen Faseragglomeraten. Zum Füllen der Form werden entweder von oben mittels eines Schlauchs lose Agglomerate in der Form derart verteilt, dass auch Bereiche unterschiedlicher Dichte geschaffen werden können, indem mehrere Fasern angehäuft werden. In einer alternativen Ausführungsform werden die Fasern in eine geschlossene Form durch einen Luftstrom eingeblasen, wobei durch unterschiedliche Strömungsgeschwindigkeiten der einzelnen Lufteinlässe unterschiedliche Fülldichten innerhalb der Form realisiert werden sollen. Nach Einfüllen der Agglomerate wird eine Presse abgesenkt, so dass die Agglomerate innerhalb der Form zusammengedrückt werden. Durch Zuführen von heißer Luft werden die Agglomerate dann miteinander verklebt, so dass ein Formkörper entsteht.

Aufgabe der vorliegenden Erfindung ist es, auf einfache und effiziente Weise dreidimensional ausgebildete Formteile herzustellen, welche Bereiche mit unterschiedlicher Dicke aufweisen, und in welchen die Dichte lokal variiert werden kann. Dabei sollen die Dichtevariationen innerhalb des Formteils exakt reproduzierbar sein, damit auch bei großen Stückzahlen identische Teile hergestellt werden können.

Gelöst wird die Aufgabe erfindungsgemäß durch ein Verfahren gemäß Anspruch 1. Die Ansprüche 2 bis 4 definieren vorteilhafte Ausgestaltungen des erfindungsgemäßen Verfahrens.

Die Aufgabe wird weiter gelöst durch eine Vorrichtung nach Anspruch 5. Bevorzugte Ausführungsformen der erfindungsgemäßen Vorrichtung werden in den Ansprüchen 6 bis 8 angegeben.

Anspruch 9 ist auf ein Formteil selbst gerichtet.

Das vorgeschlagene Verfahren zur Herstellung von dreidimensional ausgeprägten Formteilen aus Fasermaterial unter Verwendung einer hohlen Form, umfassend eine Unterform, deren Innenseite die Kontur der Unterseite des Formteils bestimmt, und wenigstens eine Oberform, deren Innenseite die Kontur der Oberseite des Formteils bestimmt, wobei die Unterform und/oder die Oberform Löcher zum Durchströmen von Luft aufweisen, umfasst die folgenden Schritte: Fasern werden mittels eines Luftstroms in den Zwischenraum zwischen der Unterform und einer temporären Hilfsoberform eingeblasen. Die Fasern lagern sich an den Innenseiten der Unterform und der temporären Hilfsoberform an bis die Form gefüllt ist, wodurch sich ein Rohling aus Fasermaterial bildet. Anschließend wird die temporäre Hilfsoberform abgenommen und die Oberform auf die Unterform aufgesetzt. Hierdurch wird der Rohling verdichtet. Anschließend werden die Fasern mittels eines beigemischten Bindemittels verbunden, wodurch sich der Rohling zum Formteil verfestigt. Das Bindemittel kann entweder zusammen mit den Fasern eingeblasen oder erst im Verlauf des Verfahrens beigemischt werden.

Die Fasern werden mittels eines Luftstroms in den Zwischenraum der aus der Unterform und der temporären Hilfsoberform bestehenden Form geblasen. Die Luft, die Träger der Fasern ist, entweicht durch Löcher in der Unterform und/oder der temporären Hilfsoberform. Die einzelnen Fasern sind größer als die Löcher, so dass sie sich an den Innenseiten der Form anlagern. Die Anlagerung beginnt an der der Einblasöffnung gegenüber liegenden Seite im Innenraum der Form. Dabei baut sich ein Rohling aus Fasermaterial aus, der eine konstante Dichte aufweist.

Das Einblasen der Fasern kann auch durch mehrere Einströmöffnungen gleichzeitig erfolgen. Ist hierbei der Einblasdruck an den einzelnen Einströmöffnungen unterschiedlich, bilden sich Bereiche unterschiedlicher Dichte im Rohling aus.

Die in den Zwischenraum zwischen Unterform und temporärer Hilfsoberform eingeblasenen Fasern lagern sich an deren Innenseite ab und bilden einen Rohling. Die Fasern des Rohlings werden durch den Einblasdruck leicht zusammengepresst, so dass sie locker zusammenhalten. Der Rohling hat gerade eine solche Stabilität, dass er auch bei abgenommener temporärer Hilfsoberform nicht in sich zusammenfällt, sondern seine Form hält. Durch geeignete Dimensionierung der Oberform kann dann der Rohling ganz oder nur in bestimmten Bereichen verdichtet werden. In den lokalen Bereichen, in denen der Rohling eine höhere Dichte aufweisen soll, weist die Oberform im Vergleich zur temporären Hilfsoberform ein kleineres Lumen auf. Das Formteil wird später an den verdichteten Bereichen des Rohlings eine entsprechend höhere Dichte aufweisen. Durch dieses Verfahren lassen sich die verdichteten Bereiche innerhalb des Formteils exakt reproduzieren.

Wenn die aus Unterform und temporärer Hilfsoberform bestehende Form vollständig mit Fasermaterial gefüllt ist, hat sich ein Rohling gebildet, der die Konturen der Form aufweist. Dieser Rohling wird nach Austausch der temporären Hilfsoberform durch die Oberform verdichtet und anschließend zum Formteil verfestigt, indem die Fasern mittels eines Bindemittels miteinander verbunden werden. Es entsteht ein Formteil, das exakt den Konturen der Innenseiten der Form entspricht. Vorteilhaft an dem Verfahren ist, dass das Formteil eine konstante Dichte aufweist. Die Dichte wird über den Druck des einströmenden Luftstroms bestimmt. Hiermit lassen sich zum einen beliebige dreidimensionale Formen herstellen, zum anderen kann ein Formteil exakt reproduziert werden.

In einer vorteilhaften Weiterbildung umfasst das erfindungsgemäße Verfahren folgende zusätzlichen Zwischenschritte: Die Fasern werden mittels eines Luftstroms in den Zwischenraum zwischen der Unterform und einer ersten temporären Hilfsoberform eingeblasen. Fasern lagern sich zunächst an der Innenseite der Unterform und dieser ersten temporären Hilfsoberform an, wodurch ein Zwischenrohling aus Fasermaterial gebildet wird. Anschließend wird die erste temporäre Hilfsoberform abgenommen und wird ersetzt durch eine zweite temporäre Hilfsoberform, die auf die Unterform aufgesetzt wird. Im nächsten Schritt werden weitere Fasern mittels eines Luftstroms in den Zwischenraum zwischen der Unterform und der zweiten temporären Hilfsoberform eingeblasen. Diese Fasern lagern sich an der Oberseite des Zwischenrohlings und an der Innenseite der zweiten temporären Hilfsoberform an, wodurch sich ein Rohling aus Fasermaterial bildet. Danach wird die zweite temporäre Hilfsoberform abgenommen. An ihre Stelle tritt die Oberform, die auf die Unterform aufgesetzt wird. Der Rohling wird dabei zu seiner endgültigen Form verdichtet.

Mittels des vorstehend beschriebenen Verfahrens ist es möglich, Formteile herzustellen, die aus unterschiedlichen Schichten bestehen. Jede einzelne Schicht kann verschiedene Dichten aufweisen. Auf diese Weise lassen sich hochkomplexe Formteile erstellen, die verschiedene Dichtebereiche aufweisen. Zudem ist es auch möglich, unterschiedliche Fasermaterialien für jede einzelne Schicht zu verwenden.

Selbstverständlich ist es auch möglich, mehr als nur zwei temporäre Hilfsoberformen zu verwenden. So können nach demselben Prinzip nahezu beliebig geschichtete Formteile hergestellt werden. Das Verfahren kann noch dadurch erweitert werden, dass die einzelnen Schichten oder einige der Schichten durch Aufsetzen einer geeigneten Oberform bzw. Hilfsoberform oder eines Stempels zusätzlich verdichtet werden.

In einer vorteilhaften Ausgestaltung des Verfahrens wird das Einblasen dann beendet, wenn ein vorgegebener Wert des Luftdrucks in der Form erreicht wird. Da sich die Fasern an der der Einblasöffnung gegenüberliegenden Seite der Form allmählich anlagern, steigt auch der Staudruck in der Form langsam an. Beim Erreichen eines vorgegebenen Drucks ist die Form komplett gefüllt. Wird das Einblasen genau zu diesem Zeitpunkt beendet, wird sichergestellt, dass immer exakt gleiche Formteile erzeugt werden. Durch geeignete Wahl des vorgegebenen Druckwerts kann die Dichte der Rohlinge und damit auch die Dichte der Formteile beeinflusst werden. Je höher der vorgegebene Grenzwert, desto größer ist die Dichte des entstehenden Rohlings. Die Kontrolle des Drucks gewährleistet eine gleichbleibende Dichte des Rohlings, auch wenn die Fasern schneller oder mit größerem Druck eingeblasen werden, um die Produktionszeit weiter zu erhöhen.

Bevorzugt wird der Rohling dadurch erwärmt, dass die geschlossene Form erhitzt und/oder die Form von heißer Luft durchströmt wird. Dabei wird eine dauerhafte Verbindung des Fasermaterials durch eine thermische Reaktion des Bindemittels erzeugt. Der Rohling wird dabei zum Formteil verfestigt.

Bei der Verwendung von Thermoplasten als Bestandteil des Fasermaterials oder bei thermisch reagierenden Bindemitteln, wie beispielsweise Polypropylenfasern, Kunststofffasem oder Phenolharz, muss der Rohling erwärmt werden, damit die Fasern miteinander verschmelzen und sich ein Formteil bildet, das formstabil ist. Dies kann dadurch geschehen, dass die geschlossene Form selbst erhitzt wird. Dabei stehen unterschiedliche Methoden zur Verfügung. Die Form kann zum Beispiel in einem Ofen erhitzt werden, durch Bestrahlung mit Mikrowellen oder durch die Beleuchtung mit Wärmelampen. Alternativ ist es auch möglich, den Rohling selbst zu erhitzen, indem die Form, deren Unterform und Oberform Löcher zum Durchströmen von Luft aufweisen, mit heißer Luft durchströmt wird. Dies hat den Vorteil, dass der Rohling direkt erwärmt wird. Anstelle von heißer Luft kann auch heißer Dampf verwendet werden. Die Verfestigung des Rohlings zum Formteil kann bei geeigneter Wahl der Fasern bzw. des Bindemittels durch Aushärten oder durch Polymerisation erzielt werden.

Die vorgeschlagene Vorrichtung zur Herstellung von dreidimensional ausgeprägten Formteilen aus Fasermaterial umfasst eine Form, gebildet von einer Unterform, deren Innenseite die Kontur der Unterseite des Formteils bestimmt, und wenigstens einer temporären Hilfsoberform und einer Oberform, wobei die Innenseite der Oberform die Kontur der Oberform des Formteils bestimmt und die Unterform, die temporäre Hilfsoberform und/oder die Oberform Löcher zum Durchströmen der Luft aufweisen. Erfindungsgemäß weist die Form wenigstens eine Einströmöffnung zum Einblasen des Fasermaterials auf. Die Einströmöffnung kann nahezu an beliebiger Stelle der Form angeordnet sein. Die Einströmöffnung kann also sowohl an der Unterform als auch an der Oberform oder an einer temporären Hilfsoberform angeordnet sein. Es können auch mehrere Einströmöffnungen vorgesehen sein. Dies ist insbesondere dann vorteilhaft, wenn die Form eine gewisse Größe übersteigt und die Kontur der Form sehr unregelmäßig ist und viele Ein- und Ausbuchtungen aufweist. Über die Größe der Einströmöffnung kann die Zeit bestimmt werden, die benötigt wird, bis sich innerhalb der Form ein Rohling vollständig aufgebaut hat. Die Fläche der Einströmöffnung bzw. die Gesamtfläche bei mehreren Einströmöffnungen soll die Gesamtfläche der Löcher in der Unterform und Oberform bzw. in der Unterform und der temporären Hilfsoberform nicht überschreiten. Andernfalls baut sich von Anfang an ein Druck in der Form auf, der das Einblasen des Fasermaterials erschwert bzw. unmöglich macht.

Die Einströmöffnung ist über einen Strömungskanal mit einem Gebläse verbunden. Mittels des Gebläses wird der Luftstrom erzeugt, der die Fasern in die Form einbläst. Die Fasern werden in den Strömungskanal eingebracht und über diesen durch die Einströmöffnung in die Form geleitet. Damit ist die Erzeugung des Luftstromes und die Zuführung des Fasermaterials in den Strömungskanal unabhängig von der verwendeten Form. Es können also mit der gleichen Einblasanlage unterschiedliche Formen gefüllt werden.

In einer bevorzugten Ausführungsform ist im Inneren der Form ein Drucksensor zur Messung des Luftdrucks angeordnet. Der Drucksensor ist vorzugsweise in der Nähe der Einströmöffnung platziert. Der am Drucksensor gemessene. Druck ist ein Maß für den Grad der Anlagerung der Fasern innerhalb der Form. Über die Messung des Luftdrucks kann die Dichte des Rohlings bestimmt und geregelt werden.

In einer bevorzugten Ausführungsform der erfindungsgemäßen Vorrichtung ist wenigstens eine weitere temporäre Hilfsoberform anstelle der temporären Hilfsoberform und der Oberform auf die Unterform aufsetzbar. Die Verwendung von mehreren temporären Hilfsoberformen erweist sich als vorteilhaft, wenn Formteile unterschiedlicher Dichte oder mit unterschiedlichen Schichten hergestellt werden sollen. Die temporäre Hilfsoberform wird auf die Unterform aufgesetzt und ausgefüllt. Daran anschließend kann sie gegen die weitere temporäre Hilfsoberform ausgetauscht werden. Diese wird anschließend andererseits gegen die Oberform ausgetauscht. Weicht das Lumen der Hilfsoberformen voneinander und von dem Volumen der Oberform ab, kann eine Verdichtung des Rohlings noch vor dessen Verfestigung zum Formteil erzielt werden. Die Verdichtung kann auch lediglich auf lokale Bereiche beschränkt sein. Die Dichteverteilung ist jedoch sehr gut reproduzierbar.

Vorteilhaft ist ferner eine Vorrichtung, bei der ein Drehtisch mit vier Bearbeitungsstationen eingesetzt wird. In einer Einblasstation wird Fasermaterial in die Form eingeblasen. Eine Heizstation dient zum Beheizen der Form. Das Abkühlen eines Formteils wird in einer Abkühlstation durchgeführt. In einer Entnahmestation kann die Form geöffnet und das Formteil entnommen werden. Die Verwendung eines solchen Drehtischs mit wenigstens vier Stationen weist den Vorteil auf, dass jede Station speziell für die dort auszuführenden Verfahrensschritte ausgebildet ist. Die einzelnen Stationen lassen sich so gestalten, dass die Herstellung der Formteile optimiert werden kann. Durch die Verwendung eines Drehtisches mit mehreren Stationen können mehrere Formteile gleichzeitig hergestellt werden, wobei sich jedes Formteil in einem anderen Herstellungsstadium befindet. Dadurch kann die Herstellungszeit eines einzelnen Formteils deutlich reduziert werden.

Ein Formteil, das nach dem erfindungsgemäßen Verfahren hergestellt wurde, zeichnet sich durch mehrere Schichten unterschiedlicher Dichte aus. Die verschiedenen Schichten oder Bereiche sind räumlich klar voneinander abgegrenzt. Es können entweder verschiedene Schichten oder auch Teilbereiche unterschiedlicher Dichte erzeugt werden. Die Bereiche mit höherer Dichte können an beliebigen Stellen des Formteils vorgesehen sein, unabhängig von der Geometrie des Formteils. Auf diese Weise lassen sich auch Bereiche mit geringerer Dichte realisieren, in denen die Anforderungen an die Schalldämmung des Formteils nur eine untergeordnete Rolle spielen. Das Formteil weist dann insgesamt ein geringeres Gewicht auf.

Die Erfindung wird nachstehend anhand der beigefügten Zeichnungen näher erläutert. Es zeigen:
- Figur 1: eine Vorrichtung zur Herstellung von Formteilen mit vier Bearbeitungsstationen ;
- Figur 2: eine vollständige Anlage zur Herstellung von Formteilen, schematisch;
- Figur 3: eine Form zur Herstellung von Formteilen;
- Figuren 4a bis 4f: die einzelnen Verfahrensschritte zur Herstellung eines Formteils.

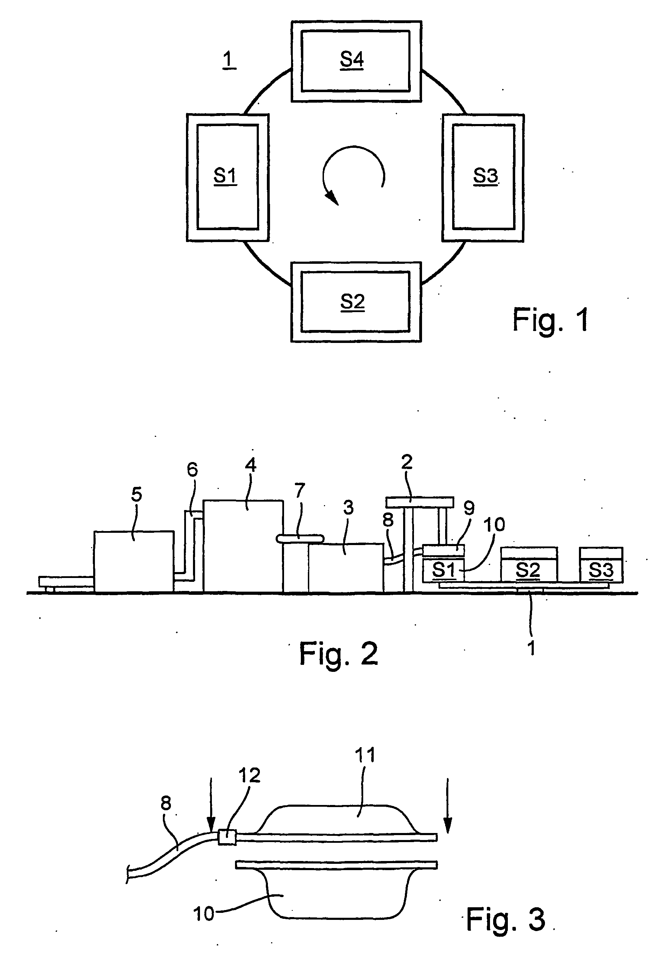

Die in Figur 1 dargestellte Vorrichtung umfasst eine Einblasstation S1, eine Heizstation S2, eine Abkühlstation S3 und eine Entnahmestation S4. Die Stationen S1 bis S4 sind auf einem Drehtisch 1, der entgegen dem Uhrzeigersinn drehbar ist, angeordnet. In der Einblasstation S1 wird Fasermaterial in eine geschlossene Form eingeblasen, bis sich ein Rohteil ausbildet. In der Heizstation S2 wird die Herstellungsform beheizt, so dass sich das Rohteil zum Formteil verfestigt. In der Abkühlstation S3 wird die Herstellungsform abgekühlt. In der Entnahmestation S4 wird die Form geöffnet, so dass das hergestellte Teil entnommen werden kann.

Figur 2 zeigt eine vollständige Anlage zur Herstellung von Formteilen, die den Drehtisch 1, eine Zuführeinrichtung 2 zum Zuführen und Wechseln von .Formen, ein Gebläse 3, einen Faserspeicher 4 und einen Ballenöffner 5 umfasst. Vom Drehtisch 1 sind die Einblasstation S1, die Heizstation S2 und die Abkühlstation S3 zu erkennen.

Vorgemischte Faserballen, die als Rohmaterial dienen, werden am Ballenöffner 5 angeliefert und dort zu kleinen Fasern zerkleinert. Über eine erste Leitung 6 werden die Fasern mittels Druckluft in einen Faserspeicher geleitet. Von hier werden sie über eine weitere Leitung 7 dem Gebläse 3 zugeführt. Die Leitung 7 kann alternativ auch als Transportband ausgeführt sein. Die Fasern fällen zwischen das Gebläse 3 und einen Einströmkanal 8. Das Gebläse 3 erzeugt einen Luftstrom, mittels dem die Fasern durch den Einströmkanal 8 in eine temporäre Hilfsoberform 9, die auf einer Unterform 10 aufgesetzt ist, eingeblasen wird. Die temporäre Hilfsoberform 9 wird in der Zuführeinrichtung 2 auf die Unterform 10 aufgesetzt.

Figur 3 zeigt die Form zur Herstellung eines Formteils. Die Form umfasst die Unterform 10 und eine darauf aufsetzbare Oberform 11. Die Unterform 10 und die Oberform 11 sind verschließbar. An der Oberform 11 ist eine Einströmöffnung 12 ausgebildet, an die der Einströmkanal 8 angeschlossen wird. Die Fasern werden durch die Einströmöffnung 12 in den geschlossenen Hohlraum der Form eingeblasen.

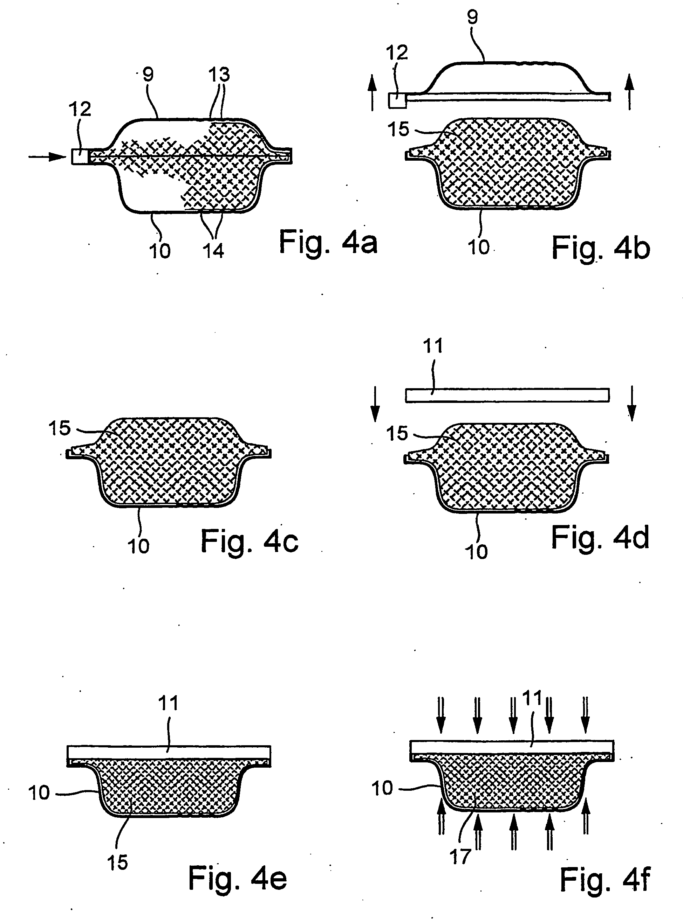

Figur 4a zeigt eine geschlossene Form, umfassend die Unterform 10 und eine temporäre Hilfsoberform 9. Die Unterform 10 und die temporäre Hilfsoberform 9 sind fest verschlossen. Die Fasern werden durch die Einströmöffnung 12 in die geschlossene Form eingeblasen. Sie lagern sich an den Innenseiten der Unterform 10 und der temporären Hilfsoberform 9 an. Die Anlagerung geschieht von der der Einströmöffnung 12 gegenüberliegenden Seite her. Die einströmende Luft entweicht durch Löcher 13 in der temporären Hilfsoberform 9 und durch Löcher 14 in der Unterform 10. Durch die Anlagerung der Fasern im Inneren der Form werden allmählich immer mehr Löcher 13, 14 abgedeckt, da die Fasern größer sind als die Löcher 13, 14. Das Einblasen der Fasern wird gestoppt, wenn die geschlossene Form vollständig mit Fasermaterial gefüllt und damit ein Rohling gebildet ist. Dazu wird über einen oder mehrere Drucksensoren der Druck in der Form gemessen. Beim Erreichen eines vorgegebenen Grenzwertes wird das Einblasen gestoppt bzw. unterbrochen. Dies erfolgt abrupt, beispielsweise durch Öffnen eines (hier nicht dargestellten) Bypassventils im Einströmkanal oder einfaches Abschalten des Gebläses.

Figur 4b zeigt die aus Unterform 10 und temporärer Hilfsoberform 9 bestehende Form mit einem Rohling 15, der exakt die Konturen der Innenseiten der Form aufweist. Die temporäre Hilfsoberform 9 wird nun von der Unterform 10 gelöst und nach oben abgenommen.

Nach Abnahme der temporären Hilfsoberform wird der Rohling 15 ausschließlich von der Unterform 10 getragen (Figur 4c). Durch den erzeugten Luftdruck beim Einblasvorgang in die geschlossene Form sind die Fasern so stark miteinander verbunden, dass der Rohling 15 formstabil ist. Er behält auch nach Abnahme der temporären Hilfsoberform 9 seine äußere Form.

Im nächsten Verfahrensschritt gemäß Bild 4d wird die Oberform 11, die hier als ebene Platte ausgebildet ist, von oben auf die Unterform 10 aufgesetzt. Das Aufsetzen der Oberform 11 auf die Unterform 10 geschieht mit einem Druck, der abhängig von der Teilegröße und von der Größe der Form ist, und der bis zu mehreren Tonnen betragen kann. Dadurch wird der Rohling 15 verdichtet, wie in Figur 4e dargestellt. Der Rohling 15 weist nun die Konturen der Unterform 10 und der Oberform 11 auf.

Die vorstehend beschriebenen Verfahrensschritte werden in der Einblasstation S1 auf dem Drehtisch (vgl. Fig. 1) durchgeführt. Anschließend wird der Drehtisch 1 um eine viertel Umdrehung weitergedreht.

Im folgenden Verfahrensschritt, der in Figur 4f gezeigt ist, wird die aus Unterform 10 und Oberform 11 gebildete Form von heißer Luft durchströmt. Das entspricht der Heizstation S2 in Figur 1. Die heiße Luft strömt abwechselnd durch die Löcher 14 der Unterform 10 sowie durch Löcher 16 der Oberform 11. Die Lufttemperatur liegt dabei etwas über dem Schmelzpunkt des beigefügten Bindemittels, das hier aus Polypropylenfasern besteht. Nach ca. zwei Minuten ist der Prozess beendet. Der Rohling hat sich nun zu einem Formteil 17 verfestigt.

Der Drehtisch 1 (vgl. Fig. 1) wird nun um weitere 90 Grad gedreht. Die Form, umfassend die Unterform 10 und die Oberform 11, bleibt geschlossen. Sie wird nun mit kalter Luft durchströmt, bis das Formteil 17 abgekühlt ist. Dies findet in der Abkühlstation S3 von Figur 1 statt.

Im letzten Verfahrensschritt wird der Drehtisch 1 (Fig. 1) nochmals um weitere 90 Grad zur Entnahmestation S4 gedreht. Hier wird die Oberform 11 von der Unterform 10 abgenommen, das fertige Formteil 17 kann entnommen werden.

### Zusammenstellung der Bezugszeichen

- 1: Drehtisch
- 2: Zuführeinrichtung
- 3: Gebläse
- 4: Faserspeicher
- 5: Ballenöffner
- 6: erste Leitung
- 7: zweite Leitung
- 8: Einströmkanal
- 9: temporäre Hilfsoberform
- 10: Unterform
- 11: Oberform
- 12: Einströmöffnung
- 13: Löcher (von 9)
- 14: Löcher (von 10)
- 15: Rohling
- 16: Löcher (von 11)
- 17: Formteil
- S1: Einblasstation
- S2: Heizstation
- S3: Abkühlstation
- S4: Entnahmestation

## Patentansprüche

1. Verfahren zur Herstellung von dreidimensional ausgeprägten Formteilen aus Fasermaterial unter Verwendung einer Form, umfassend eine Unterform, deren Innenseite die Kontur der Unterseite des Formteils bestimmt, und wenigstens eine Oberform, deren Innenseite die Kontur der Oberseite des Formteils bestimmt, wobei die Unterform und/oder die Oberform Löcher zum Durchströmen von Luft aufweisen, **gekennzeichnet durch** die folgenden Schritte:
- Einblasen von Fasern mittels eines Luftstroms in den Zwischenraum zwischen der Unterform (10) und einer temporären Hilfsoberform (9);
- Anlagern von Fasern an den Innenseiten der Unterform (10) und der temporären Hilfsoberform (9) bis die Form gefüllt ist, wodurch sich ein Rohling (15) aus Fasermaterial bildet;
- Abnehmen der temporären Hilfsoberform (9);
- Aufsetzen der Oberform (11), wodurch der Rohling (15) verdichtet wird; und
- Verbinden der Fasern mittels eines beigemischten Bindemittels, wodurch sich der Rohling (15) zum Formteil (17) verfestigt.

2. Verfahren nach Anspruch 1, umfassend die folgenden Schritte:
- Einblasen von Fasern mittels eines Luftstroms in den Zwischenraum zwischen der Unterform (10) und einer ersten temporären Hilfsoberform (9);
- Anlagern von Fasern an den Innenseiten der Unterform (10) und der ersten temporären Hilfsoberform (9) bis die Form gefüllt ist, wodurch sich ein Zwischenrohling (15) aus Fasermaterial bildet;
- Abnehmen der ersten temporären Hilfsoberform (9);
- Aufsetzen einer zweiten temporären Hilfsoberform (9);
- Einblasen von weiteren Fasern mittels eines Luftstroms in den Zwischenraum zwischen der Unterform (10) und der zweiten temporären Hilfsoberform (9);
- Anlagern von weiteren Fasern an der Oberseite des Zwischenrohlings (15) und der Innenseite der zweiten temporären Hilfsoberform (9), wodurch sich ein Rohling (15) aus Fasermaterial bildet;
- Abnehmen der zweiten temporären Hilfsoberform (9); und
- Aufsetzen der Oberform (11), wodurch der Rohling (15) verdichtet wird.

3. Verfahren nach Anspruch 1 oder 2, **dadurch gekennzeichnet, dass** das Einblasen beendet wird, wenn ein vorgegebener Wert des Luftdrucks in der Form erreicht wird.

4. Verfahren nach einem der Ansprüche 1 bis 3, **dadurch gekennzeichnet, dass** der Rohling (15) erwärmt wird, indem die geschlossene Form erhitzt und/oder die Form von heißer Luft durchströmt wird, wodurch eine dauerhafte Verbindung des Fasermaterials durch Reaktion des Bindemittels erzeugt und der Rohling (15) zum Formteil (17) verfestigt wird.

5. Vorrichtung zur Herstellung von dreidimensional ausgeprägten Formteilen aus Fasermaterial nach dem Verfahren gemäß einem der Ansprüche 1 bis 4 unter Verwendung einer Form, umfassend eine Unterform, deren Innenseite die Kontur der Unterseite des Formteils bestimmt, und wenigstens eine Oberform, deren Innenseite die Kontur der Oberseite des Formteils bestimmt, **gekennzeichnet durch** eine temporäre Hilfsoberform, wobei die temporäre Hilfsoberform, die Unterform und/oder die Oberform Löcher, zum Durchströmen von Luft aufweisen, wobei die Form wenigstens eine Einströmöffnung (12) zum Einblasen des Fasermaterials aufweist.

6. Vorrichtung nach Anspruch 5, **dadurch gekennzeichnet, dass** im Inneren der Form ein Drucksensor zur Messung des Luftdrucks angeordnet ist.

7. Vorrichtung nach Anspruch 5 oder 6, **dadurch gekennzeichnet, dass** wenigstens eine temporäre Hilfsoberform (9) anstelle der Oberform (11) auf die Unterform (10) aufsetzbar ist.

8. Vorrichtung nach einem der Ansprüche 5 bis 7, **gekennzeichnet durch** einen Drehtisch (1) mit den folgenden vier Stationen:
- einer Einblasstation (S1), in der Fasermaterial in die Form eingeblasen wird;
- einer Heizstation (S2) zum Beheizen der Form;
- einer Abkühlstation (S3) zum Abkühlen des Formteils (17); und
- einer Entnahmestation (S4), in der die Form geöffnet und das Formteil (17) entnommen wird.

9. Formteil, hergestellt nach dem Verfahren gemäß Anspruch 2, **gekennzeichnet durch** mehrere Schichten unterschiedlicher Dichte.

## Claims

1. Method for producing three-dimensional moulded parts made of fibre material under the use of a mould comprising a bottom mould, the inner side of which determines the contours of the bottom side of the moulded part, and at least one top mould, the inner side of which determines the contours of the top side of the moulded part, with at least one of the bottom mould and the top mould having holes for the passage of air, said method being **characterised by** the following steps:
- blowing-in of fibres by means of an air current into the intermediate space between the bottom mould (10) and a temporary auxiliary top mould (9);
- depositing fibres on the inner sides of the bottom mould (10) and the temporary auxiliary top mould (9) until the mould is filled, whereby a preform (15) is formed from fibre material;
- removing the temporary auxiliary top mould (9);
- placing the top mould (11), whereby the preform (15) is compressed; and
- connecting the fibres by means of a mixed-in bonding agent whereby the preform (15) is solidified into a moulded part (17).

2. Method according to Claim 1, comprising the following steps:
- blowing-in of fibres by means of an air current into the intermediate space between the bottom mould (10) and a first temporary auxiliary top mould (9);
- depositing fibres on the inner sides of the bottom mould (10) and the first temporary auxiliary top mould (9) until the mould is filled, whereby an intermediate preform (15) is formed from fibre material;
- removing the first temporary auxiliary top mould (9);
- placing a second temporary auxiliary top mould (9);
- blowing-in of additional fibres by an air current into the intermediate space between the bottom mould (10) and the second temporary auxiliary top mould (9);
- depositing additional fibres on the top side of the intermediate preform (15) and the inner side of the second temporary auxiliary top mould (9), whereby a preform (15) made of fibre material is formed;
- removing the second temporary auxiliary top mould (9); and
- placing the top mould (11), whereby the preform (15) is compressed.

3. Method according to Claim 1 or 2, **characterised in that**
the blowing-in is ended when a predetermined value of the air pressure in the mould is reached.

4. Method according to any one of the Claims 1 to 3, **characterised in that**
the preform (15) is heated by one of heating the closed mould and causing hot air to flow through the mould, whereby a permanent connection of the fibre material is generated through reaction of the bonding agent and the preform (15) is solidified into the moulded part (17).

5. Device for producing three-dimensional moulded parts made of fibre material according to the method as set forth in any one of the Claims 1 to 4 using a mould comprising a bottom mould, the inner side of which determines the contours of the bottom side of the moulded part, and at least one top mould, the inner side of which determines the contours of the top side of the moulded part, **characterised by** a temporary auxiliary top mould, wherein the temporary auxiliary top mould, the bottom mould and/or the top mould have holes for the passage of air, wherein the mould has at least one inflow opening (12) for blowing in fibre material.

6. Device according to Claim 5, **characterised in that**
a pressure sensor for measuring the air pressure is arranged in the interior of the mould.

7. Device according to Claim 5 or 6, **characterised in that**
at least one temporary auxiliary top mould (9) can be placed on the bottom mould (10) instead of the top mould (11).

8. Device according to any one of the Claims 5 to 7, **characterised by**
a turntable (1) including the following four stations:
- a blow-in station (S1), in which fibre material is blown into the mould;
- a heating station (S2) for heating the mould;
- a cooling station (S3) for cooling the moulded part (17); and
- a removal station (S4), in which the mould is opened and the moulded part (17) is removed.

9. Moulded part, produced according to the method as set forth in Claim 2, **characterised by**:
a plurality of areas of different density.

## Revendications

1. Procédé pour la fabrication de pièces moulées conformées tridimensionnellement en matière fibreuse avec l'utilisation d'un moule, comprenant un moule inférieur, dont le côté intérieur définit le contour du côté inférieur de la pièce moulée, et au moins un moule supérieur, dont le côté intérieur définit le contour du côté supérieur de la pièce moulée, le moule inférieur et/ou le moule supérieur comprenant des trous pour le passage d'air, **caractérisé par** les phases suivantes :
- insufflation de fibres par un courant d'air dans l'espace intermédiaire compris entre le moule inférieur (10) et un moule supérieur auxiliaire temporaire (9);
- dépôt de fibres sur les côtés intérieurs du moule inférieur (10) et du moule supérieur auxiliaire temporaire (10) jusqu'à ce que le moule soit rempli, une ébauche (15) en matière fibreuse se formant de ce fait ;
- retrait du moule supérieur auxiliaire temporaire (9) ;
- mise en place du moule supérieur (11), l'ébauche (15) étant comprimée de ce fait ; et
- liaison des fibres au moyen d'un liant d'apport, l'ébauche (15) étant de ce fait consolidée en pièce moulée (17).

2. Procédé suivant la revendication 1, comprenant les phases suivantes :
- insufflation de fibres par un courant d'air dans l'espace intermédiaire compris entre le moule inférieur (10) et un premier moule supérieur auxiliaire temporaire (9) ;
- dépôt de fibres sur les côtés intérieurs du moule inférieur (10) et du premier moule supérieur auxiliaire temporaire (9) jusqu'à ce que le moule soit rempli, une ébauche intermédiaire (15) en matière fibreuse se formant de ce fait ;
- retrait du premier moule supérieur auxiliaire temporaire (9) ;
- mise en place d'un second moule supérieur auxiliaire temporaire (9) ;
- insufflation d'autres fibres par un courant d'air dans l'espace intermédiaire compris entre le moule inférieur (10) et le second moule supérieur auxiliaire temporaire (9) ;
- dépôt d'autres fibres sur le côté supérieur de l'ébauche intermédiaire (15) et sur le côté intérieur du second moule supérieur auxiliaire temporaire (9), une ébauche (15) en matière fibreuse se formant de ce fait ;
- retrait du second moule supérieur auxiliaire temporaire (9) ; et
- mise en place du moule supérieur (11), l'ébauche (15) étant comprimée de ce fait.

3. Procédé suivant l'une des revendications 1 et 2, **caractérisé en ce que** l'insufflation est achevée lorsqu'une valeur prédéfinie de la pression d'air est obtenue dans le moule.

4. Procédé suivant l'une des revendications 1 à 3, **caractérisé en ce que** l'ébauche (15) est réchauffée, le moule fermé étant chauffé et/ou le moule étant balayé par de l'air chaud, une liaison durable de la matière fibreuse étant alors produite par réaction du liant et l'ébauche (15) étant consolidée en pièce moulée (17).

5. Dispositif pour la fabrication de pièces moulées conformées tridimensionnellement en matière fibreuse suivant le procédé conforme à l'une des revendications 1 à 4 avec utilisation d'un moule, comprenant un moule inférieur, dont le côté intérieur définit le côté inférieur de la pièce moulée, et au moins un moule supérieur, dont le côté intérieur définit le contour du côté supérieur de la pièce moulée, **caractérisé par** un moule supérieur auxiliaire temporaire, le moule supérieur auxiliaire temporaire, le moule inférieur et/ou le moule supérieur comportant des trous pour le passage d'air, le moule présentant au moins une ouverture d'introduction (12) pour l'insufflation de la matière fibreuse.

6. Dispositif suivant la revendication 5, **caractérisé en ce qu'**un capteur de pression est disposé à l'intérieur du moule pour mesurer la pression d'air.

7. Dispositif suivant l'une des revendications 5 et 6, **caractérisé en ce qu'**au moins un moule supérieur auxiliaire temporaire (9) peut être mis en place sur le moule inférieur (10) au lieu du moule supérieur (11).

8. Dispositif suivant l'une des revendications 5 à 7, **caractérisé par** un plateau tournant (1) avec les quatre postes suivants :
- un poste d'insufflation (S1), dans lequel la matière fibreuse est insufflée dans le moule ;
- un poste de chauffage (S2) pour le chauffage du moule ;
- un poste de refroidissement (S3) pour le refroidissement de la pièce moulée (17) ; et
- un poste d'extraction (S4), dans lequel le moule est ouvert et la pièce moulée (17) est retirée.

9. Pièce moulée, fabriquée suivant le procédé conforme à la revendication 2, **caractérisée par** plusieurs couches de masse volumique différente.
